# EUROPEAN PATENT SPECIFICATION

(11) **EP 4 042 875 B1**
(45) Date of publication and mention of the grant of the patent: **30.07.2025**
(21) Application number: 21200509.4
(22) Date of filing: 01.10.2021
(51) Int. Cl.: A23L 5/00, A23L 33/10, A23L 33/00, A23C 9/142, A23C 9/15, A23C 9/20

(54) **A HUMAN MILK FORTIFIER**
VERSTÄRKER FÜR MUTTERMILCH
FORTIFIANT DE LAIT HUMAIN

(30) Priority: 15.02.2021 IN 202113006286
(43) Date of publication of application: 17.08.2022
(73) Proprietor: Aggarwal, Rakesh Kumar, Redditch B98 0RF (GB); Aggarwal, Saurabh, Redditch B98 0RF (GB)
(72) Inventor: Aggarwal, Rakesh Kumar, Redditch B98 0RF (GB); Aggarwal, Saurabh, Redditch B98 0RF (GB)

(56) References cited:
- EP-A1- 1 637 043
- CN-A- 105 707 239
- US-A1- 2002 031 576
- US-A1- 2005 196 508
- US-A1- 2008 160 134
- US-A1- 2011 212 244
- US-A1- 2015 201 638
- US-A1- 2018 092 374
- US-A1- 2020 054 035
- US-A1- 2020 253 230
- DATABASE WPI Week 201842, Derwent World Patents Index; AN 2018-35369H, XP002805807, "Producing human milk fortifier involves separating fat of milk into cream and skim milk, ultra-filtering using membrane technology, evaporating, crystallizing, and blending cream, and homogenizing, and pasteurizing blend"
- ANONYMOUS: "Nutrition Information 100% Human Milk-Based Neonatal Nutritional Products From Prolacta", 1 January 2020 (2020-01-01), XP055896484, Retrieved from the Internet <URL:https://prolacta.uk/Data/Sites/23/media/humavant-nutrition-brochure---eu---mkt-0597-rev-1.pdf> [retrieved on 20220301]
- ANNYMOUS: "Humactant CR", 1 March 2019 (2019-03-01), XP055896783, Retrieved from the Internet <URL:http://www.prolacta.asia/Data/Sites/31/media/spi-0019-rev-0-_humavant_cr_au_spi.pdf> [retrieved on 20220302]
- ARSLANOGLU SERTAC ET AL: "Fortification of Human Milk for Preterm Infants: Update and Recommendations of the European Milk Bank Association (EMBA) Working Group on Human Milk Fortification", FRONTIERS IN PEDIATRICS, vol. 7, 22 March 2019 (2019-03-22), XP055896751, DOI: 10.3389/fped.2019.00076
- DÉBORA M. C. THOMAZ ET AL: "Comparison between homologous human milk supplements and a commercial supplement for very low birth weight infants", JORNAL DE PEDIATRIA, 8 March 2012 (2012-03-08), BR, XP055771968, ISSN: 0021-7557, DOI: 10.2223/JPED.2166
- DIANA OLIVEIRA ET AL: "Delactosed permeate as a dairy processing co-product with major potential value: a review", INTERNATIONAL JOURNAL OF FOOD SCIENCE AND TECHNOLOGY, BLACKWELL SCIENTIFIC PUBLICATIONS, OXFORD, GB, vol. 54, no. 4, 21 December 2018 (2018-12-21), pages 999 - 1008, XP071858324, ISSN: 0950-5423, DOI: 10.1111/IJFS.14064

## Description

### BACKGROUND OF THE INVENTION

This application is a patent of addition of an earlier filed Indian patent application 201911004925.

Human milk is commonly known as the best nutrition for the infant from its nutritional composition and immunologic benefits. Because human milk is full of nutrients, it is generally considered the ideal food for babies. However, studies in recent past suggested that the human milk of pre-term mother does not deliver sufficient amount of protein and other nutrients for pre-term children.

It is a long felt need to increase the amount of nutrients in the human milk and deliver a fortified milk rich in protein and other nutrients. When human milk is fortified with protein and energy, premature children, and / or normal infants consuming such milk may have rapid growth and it better meets the nutritional needs.

With such benefits of fortified milk, among other nutrients, protein content needs to be increased to meet the needs of pre-term children as per the recommendations of ESPGHAN (European Society for Paediatric Gastroenterology, Hepatology and Nutrition).

There is a human milk fortifier product already in the market with a composition of main three ingredients (Fat, protein and lactose) in the same range as ours but has been produced by ultrafiltration of the milk up to 8 times. The main difference in the product produced by the competition is that majority of the small molecules that permeate through the ultrafiltration membrane are not recovered and mixed back with the retente. It is due to the inherent nature of protein concentration using ultrafilteration that these small molecules end up with the permeate while the retentate is the protein rich component. These small molecules include but not limited to (Mothers Milk has hundreds of nutrients) Oligosaccharides, Vitamin A, Vitamin D, Vitamin E, Lactose, LCPUFA, Epidermal growth factor which are naturally found in the mother's milk.

The product that is produced by this patent recovers most of the nutrients like Oligosaccharides, Vitamin A, Vitamin D, Vitamin E, LCPUFA, Epidermal growth factor. We achieve this by recovering these from permeate and blending back to the retentate of ultrafilteration. This human milk fortifier when added to mothers milk increase the total naturally occurring oligosaccharides content of the mixed milk.

The current invention provides a techniques/method to produce a fortifier that has a high protein content and the small molecules consisting of Oligosaccharides, Vitamin A, Vitamin D, Vitamin E, LCPUFA, Epidermal growth factor and many others. This fortifier when mixed with the mother's own milk will meet the ESPGHAN recommendation. The process is primarily a physical separation of milk components to produce a fortifier that is rich in mother's protein. Also, no-use of chemical reactions or chemical solvents in the manufacturing process, makes it a very healthy choice of infants.

The invention provides a process that removes only lactose by crystallisation and all other components of the milk back in the milk. It is very nature of crystallisation that only pure molecules of a product (Lactose in our case) separate out leaving everything else in the liquid form. Since we blend this liquid (mother liquor of crystallisation process) back into the concentrate, we recover majority of small molecules consisting of Oligosaccharides, Vitamin A, Vitamin D, Vitamin E, LCPUFA, Epidermal growth factor and many others. 2020/0253230A1 (referred to as D1) and IN201811013027 (referred to as D2) discloses the method of manufacturing human milk fortifier.

Further, the Prolacta Nutritional Information brochure Rev. 11/20 (referred to as D3) relates to manufacturing of human milk-based fortifier and has similar Fat, Protein, and Lactose

Furthermore, US Patent Application of Prolacta US2018/0092374A1 (referred to as D4) discloses that the permeate as a byproduct of fortifier manufacturing process lose lot of micronutrients which was deemed to be waste product. D4 states *"permeate (which had been thought to be a waste product lacking significant nutritional value) contains high biologically active content, including human oligosaccharides."*

Furthermore, Prolacta brochure on Humavant CR (referred to as D5) is a brochure on human milk cream dilution using a waste product

Furthermore, US 2020/0054035 Al (referred to as D7) is an attempt to concentrate HMO's using enzymatic reactions.

**Furthermore,** comparison between homologous human milk supplements and a commercial supplement for very low birth weight infants by Débora M. C. Thomaz (referred to as D8) discloses another process for removing lactose without ultrafiltration.

### SUMMARY OF THE INVENTION

The invention is defined by the subject-matter of the claims. The present invention presents a process for manufacturing a human milk fortifier product composition with a protein component in the milk fortifier in an amount ranging from 6 wt/wt % to 35 wt/wt % on solids basis; a fat component in the in the milk fortifier in an amount ranging from 0.1 wt/wt % to 36 wt/wt % on solids basis; a carbohydrate in the milk fortifier selected from the group of Lactose and Oligosaccharides present in the in an amount from 25 wt/wt % to 75 wt/wt % on solids basis, the process comprising the steps of
a) pooling human donor milk;
b) separating fat to produce a skim milk;
c) optionally microfiltration of the skimmed milk
d) pasteurization of the skimmed milk;
e) Ultrafiltration of the skim milk resulting into a retentate consisting of concentrate protein and a permeate; diafiltration of the milk to further concentrate protein;
f) Concentration of the permeate using vacuum evaporation followed by cooling of the permeate to crystalize the lactose;
g) Washing of lactose crystals from permeate resulting into recovering of the essential nutrients with low molecular weight;
h) Following the step f and g above repeatedly on the filtrate thus recovered from permeate to remove lactose;
i) The filtrate is mixed back with the retente recovering majority of the essential nutrients in retente and creating a blend;
j) Optionally adding cream, lactose and other minerals and nutrients to the blend to achieve a specific desired final composition.
   Advantageously the process comprises concentrating the blend to 40 to 75% solids. The concentrating may be done at low temperature or at temperatures between 45°C-85°C to 40%-75% total solids wt./wt. Advantageously, the concentrated blend is dried using freeze drying or lyophilisation to produce the milk fortifier;

The human milk fortifier product composition of this invention is possible to be produced in either dry powdered form or in liquid form.

The liquid form of the human milk fortifier product composition of this invention usually has a concentration of 10%-60% total solids w/v. The liquid form of the human milk fortifier product is typically produced by skipping the concentrating and drying the blend to produce a liquid form of human milk fortifier with a concentration of 10%-60% total solids w/v.

### DETAILED DESCRIPTION OF THE INVENTION

Incorporated herein, all publications, patents and patent applications, including any drawings and appendices by reference to the same extent as if each individual publication or patent application was specifically and individually indicated by reference incorporated.

Unless the context clearly dictates otherwise, the singular forms otherwise used herein and in the appended claims, "a", "an" and "the" include plural referents. Thus, for example, reference to "a sample" includes a plurality of such samples, and reference to "the protein" includes reference to one skilled in the art or more proteins and the like.

Unless defined otherwise, all technical and scientific terms used herein have the same meaning in the art to which this invention belongs one of ordinary skill in the art as commonly understood. Although methods and materials may be used as described herein with similar or equivalent methods and materials in the practice of the method and compositions of the present invention, this article describes exemplary methods, devices and materials.

Certain features of claimed subject matter have been illustrated as described herein, many modifications, substitutions, changes and equivalents will now occur to those skilled in the art. It is, therefore, to be understood that the appended claims are intended to cover all such embodiments and changes as fall within the true spirit of claimed subject matter.

It is an object of the invention to provide a product with composition of protein, fat, carbohydrate.

In another object of the invention the product prepared in this invention is in powder or liquid form.

In yet another object of the invention, the product prepared in this invention recovers and retain most of the nutrients from permeate (which is the by-product of protein concentration process) and blended back to the protein concentrate.

In yet another object of the invention, the product prepared in this invention is a human milk fortifier.

The present invention provides a method to produce up to nine-fold concentrated protein rich human milk fortifier in liquid or dried form. The techniques employed in the invention are novel and have never been used to manufacture human milk fortifier from human milk before.

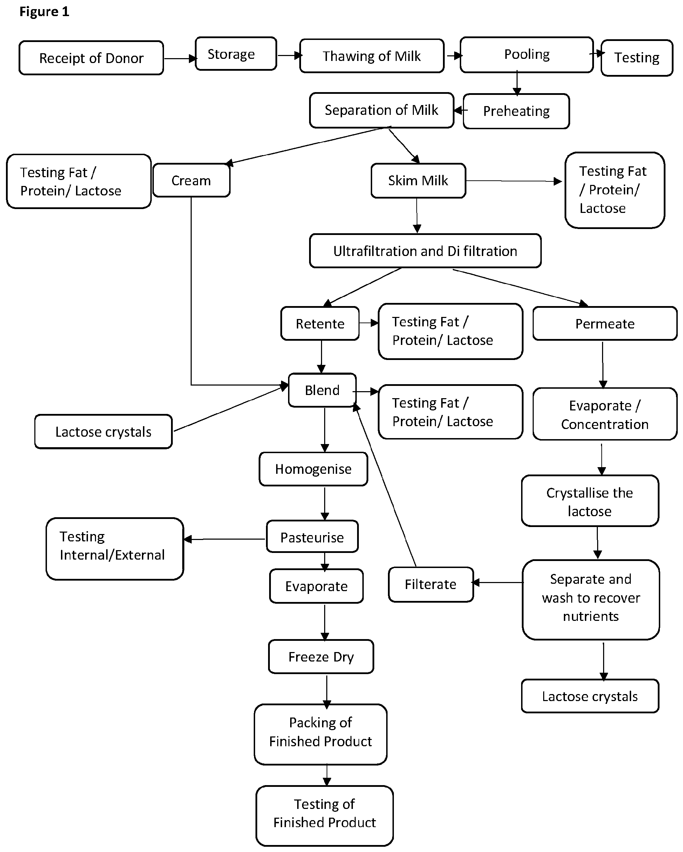

The human milk fortifier composition is produced by following the method according to the invention. To illustrate the method of such production, an example for reference has been provided below. This method is also described under flowchart FIG.1 of this application.

In our process, we used the following steps:
1. Pooling;
2. Fat separation to produce skim milk (skim has fat typically less than 0.1%). We used centrifugal Separator but those skilled in the art may as well use other well know technologies to achieve the same objective;
3. Microfiltration: if deemed necessary/optional due to quality of milk;
4. Pasteurisation of the skim milk;
5. The process further uses ultrafiltration techniques to achieve protein concentration in the fortifier. The concentration can be multi fold; the present invention has performed up to 9 fold) using ultrafiltration. Further, the lactose content was reduced further by using diafiltration. In this example, we produced the final product by 4 times the concentration using ultrafiltration (The retente volume was reduced to one fourth of the starting skim milk volume) followed by three cycles of diafilteration. The product thus concentrated is called 'retente' (or retentate) of ultrafilteration process, referring to flowchart of FIG.1. The other product is called 'permeate'.
6. It is an objective of the invention to reduce lactose content thus increasing the protein content of the retente on solids basis. It is understood that many nutrients that have a low molecular weight consisting of Oligosaccharides, Vitamin A, Vitamin D, Vitamin E, LCPUFA, Epidermal growth factor and many others are lost with the permeate thus produced using ultrafiltration process while producing concentrated protein. Our objective is to reduce only lactose while concentrating other components of mothers milk. We use the crystallisation process which allows only pure crystals of lactose to be formed. Crystallization is a unique chemical solid-liquid separation technique, in which mass transfer of a solute from the liquid solution to a pure solid crystalline phase occurs. It is a very widely used method for manufacture of pure lactose whereas the lactose is crystallised by using a combination of concentration and temperature followed by washing of crystals. Using the process of crystallisation, we follow the following to steps recover majority of the nutrients lost in permeate:
   6.a) Concentrate the permeate using vacuum evaporator to 40 to 75% solids and allowed the lactose to crystalize by cooling the concentrated product.
   6.b) Further, the crystals were separated and washed using water to recover majority of the nutrients attached to the crystals.
   6.c) The filtrate was evaporated and concentrated again by using vacuum evaporator to further remove the lactose crystals by cooling the concentrated product.
   6.d) These were re-washed with water to recover the nutrients attached to the crystals. We used vacuum evaporator to concentrate but those skilled in the art may as well use other well-known technologies including membrane technology like Reverse Osmosis and Nano-filtration to achieve the same objective. The process of recovering more and more of lactose crystals thus reducing the lactose content in the final product can be repeated many times and includes concentration of filtrate, crystallising to lactose, washing of crystals and recovering the filtrate.
7. The filtrate thus recovered was mixed back with the retente of the ultrafiltration process as described/produced in step 5 creating a blend.
8. This was followed by an optional blending operation to get the desired formulation. In blending operation, we may add back cream and lactose crystals to the blend. Optionally homogenisation can be done after blending.
9. Low temperature vacuum evaporation, preferably where the temperature of the blend stays within 45°C and 63°C during concentration of ultrafiltered retente milk or the blend to 40 to 75% total solids. We used vacuum evaporator for concentration but those skilled in the art may as well use other well-known technologies to achieve the same objective.
10. Drying of the concentrated retente milk or the blend using Freeze Drying also called lyophilisation. We used Freeze Dryer but those skilled in the art may as well use other well-known technologies of drying (like spray drying, tray drying, vacuum oven drying etc.) to achieve the same objective.
11. Further to freeze drying, we obtain a finished product with high in protein content and low lactose content.
12. It is an object of the invention, to provide a human milk fortifier by following the above explained methodical steps. The human milk fortifier is produced in preferably produced in dry powdered form and is also produced in liquid form as one of the embodiment of the invention. The concentrated retente milk or the blend is not subjected to freeze drying and instead used as liquid form. Either a dry powdered production or a liquid production or a concentrate form will not alter the composition claimed/disclosed. It may be perceived as an alternative physical form of the claimed composition with the claimed method.

The above characteristics steps yield a milk fortifier with following compositions:

a protein component in the powdered milk fortifier and in the liquid form on solids basis is in an amount ranging from 6 wt/wt % to 35 wt/wt %; a fat component in the in the powdered milk fortifier in an amount ranging from 0.1 wt/wt % to 36 wt/wt %; a carbohydrate in the powdered milk fortifier selected from the group of Lactose and Oligosaccharides present in the in an amount from 25 wt/wt % to 75 wt/wt %.

The powder thus produced has undergone minimum processing, retains most of the essential nutrients like Oligosaccharides, Vitamin A, Vitamin D, Vitamin E, LCPUFA, Epidermal growth factor available naturally in mother's milk. This powder can fortify the mother's milk in protein and essential nutrients present naturally in mother's milk. As an illustrative reference for composition thus achieved in the powder produced are following:

| | Gms/100 gms of powder |
|---|---|
| Fat | 10.98 |
| Protein | 28.56 |
| Lactose | 52.00 |
| Total Solids | 97.00 |

Another reference of composition made by adding 1 gms. of this powder to 25 mL of Pre-term mother's milk, we get the following composition.

| | Mother's Milk 25 mL³ | Mother's Milk +One sachet of Mother's Milk Fortifier of Example 2 |
|---|---|---|
| Fat in Gms | 0.9 | 1.01 |
| Protein in Gms | 0.4 | 0.69 |
| Carbohydrate in Gms | 1.8 | 2.30 |

Another reference of composition we produced in a powder form with the following composition consisting of a different blend are as follows:

| | Gms/100 gms of powder |
|---|---|
| Fat | 30.37 |
| Protein | 29.80 |
| Lactose | 28.00 |
| Total Solids | 97.00 |

Many doctors have criticised the liquid human milk fortifier already available on two main grounds. These are mainly:
(a) The product displaces mothers milk (while our Powder Fortifier does not displace the mother's milk at all) hence the essential nutrients available in mother's milk are reduced. To give an example, if the available human milk fortifier 50 ml is mixed with 50 ml of mother's milk, the baby will only receive the half of the essential nutrients equal to 50 mL of its own mother's milk.

The available human milk fortifier loses a significant portion of naturally occurring Oligosaccharides, Vitamin A, Vitamin D, Vitamin E, LCPUFA, Epidermal growth factor in the mother's milk in the process of ultrafiltration which are not recovered and added back to the retentate.

The produced human milk fortifier product composition not only retains majority of the small molecules like Oligosaccharides, Vitamin A, Vitamin D, Vitamin E, Lactose, LCPUFA, Epidermal growth factor but supplements what is available in Mothers milk already. To make 100 mL of fortified mothers milk, we add powder to 100mL of mother's milk hence no displacement of mother's milk by fortifier.

## Claims

1. A process of manufacturing a human milk fortifier composition comprising
a protein component in the milk fortifier composition in an amount ranging from 6 wt/wt % to 35 wt/wt % on solids basis;
a fat component in the milk fortifier composition in an amount ranging from 0.1 wt/wt
% to 36 wt/wt % on solids basis;
a carbohydrate in the milk fortifier composition selected from the group of Lactose and Oligosaccharides present in the milk fortifier composition in an amount from 25 wt/wt % to 75 wt/wt % on solids basis, the method comprising the steps of:
a. pooling human donor milk;
b. separating fat to produce a skim milk;
c. optionally microfiltrating the skimmed milk
d. pasteurizing the skimmed milk;
e. ultrafiltrating the skim milk resulting into a retentate consisting of concentrate protein and a permeate; diafiltrating the milk to further concentrate protein;
f. concentrating the permeate using vacuum evaporation followed by cooling of the permeate to crystalize the lactose;
g. washing of lactose crystals from permeate resulting into recovering of the essential nutrients with low molecular weight;
h. following the step f and g above repeatedly on the filtrate thus recovered from permeate to remove lactose;
i. mixing back the filtrate with the retentate recovering essential nutrients in retentate and creating a blend; and
j. optionally adding cream, lactose and other minerals and nutrients to the blend to achieve a specific desired final composition.

2. The process as claimed in claim 1, comprising concentrating the blend to 40 to 75% solid and drying the concentrated blend using freeze drying or lyophilisation to produce a milk fortifier.

3. The process as claimed in any of the preceding claims , wherein the blend is concentrated at temperatures between 45°C-85°C to 40%-75% total solids wt./wt.

4. The process as claimed in claim 3, wherein the steps of concentrating and drying the blend are skipped to produce a liquid form of human milk fortifier with a concentration of 10%-60% total solids w/v.

## Patentansprüche

1. Ein Verfahren zur Herstellung einer Humanmilchverstärker-Zusammensetzung, umfassend:
Ein Proteinbestandteil in der Milch-Anreicherungsmittel-Zusammensetzung in einer Menge von 6 Gew./Gew.-% bis 35 Gew./Gew.-% auf Feststoffbasis;
Ein Fettbestandteil in der Milch-Anreicherungsmittel-Zusammensetzung in einer Menge von 0,1 Gew./Gew.-% bis 36 Gew./Gew.-% auf Feststoffbasis;
Ein Kohlenhydrat in der Milch-Anreicherungsmittel-Zusammensetzung, ausgewählt aus der Gruppe von Laktose und Oligosacchariden, vorhanden in der Milch-Anreicherungsmittel-Zusammensetzung in einer Menge von 25 Gew./Gew.-% bis 75 Gew./Gew.-% auf Feststoffbasis, wobei das Verfahren die folgenden Schritte umfasst:
a. Zusammenführung menschlicher Spendermilch;
b. Trennen von Fett zur Herstellung von Magermilch;
c. Optional eine Mikrofiltration der Magermilch durchführen
d. Pasteurisieren der Magermilc;
e. Ultrafiltration der Magermilch, wodurch ein Retentat mit konzentriertem Protein und ein Permeat entsteht; Diafiltration der Milch zur weiteren Protein-konzentrierung;
f. Konzentrieren des Permeats durch Vakuumverdampfung, gefolgt von Abkühlung des Permeats zur Kristallisation der Laktose;
g. Waschen der Laktosekristalle aus dem Permeat, was zur Rückgewinnung der essentiellen Nährstoffe mit niedrigem Molekulargewicht führt.;
h. Folgen der Schritte f und g oben wiederholt am Filtrat, das aus dem Permeat zurückgewonnen wurde, um Laktose zu entfernen.;
i. Mischen des Filtrats zurück mit dem Retentat, Rückgewinnung der essentiellen Nährstoffe im Retentat und Erzeugen einer Mischung; und
j. Optionales Hinzufügen von Sahne, Laktose und anderen Mineralien und Nährstoffen zur Mischung, um eine spezifische gewünschte Endzusammensetzung zu erreichen.

2. Das Verfahren gemäß Anspruch 1, das das Konzentrieren der Mischung auf 40 bis 75 % Feststoffe und das Trocknen der konzentrierten Mischung durch Gefriertrocknung oder Lyophilisation umfasst, um ein Milch-Anreicherungsmittel zu produzieren.

3. Das Verfahren gemäß einem der vorhergehenden Ansprüch, wobei die Mischung bei Temperaturen zwischen 45°C und 85°C auf 40%-75% Gesamtfeststoffe Gew./Gew. konzentriert wird.

4. Das Verfahren gemäß Anspruch 3, wobei die Schritte des Konzentrierens und Trocknens der Mischung übersprungen werden, um eine flüssige Form des menschlichen Milch-Anreicherungsmittels mit einer Konzentration von 10%-60% Gesamtfeststoffen Gew./Vol. zu erzeugen.

## Revendications

1. Un procédé de fabrication d'une composition de fortifiant pour lait maternel comprenant:
un composant protéique dans la composition de fortifiant pour lait en une quantité allant de 6 % p/p à 35 % p/p sur base de matières sèches ;
un composant lipidique dans la composition de fortifiant pour lait en une quantité allant de 0,1 % p/p à 36 % p/p sur base de matières sèches;
un glucide dans la composition de fortifiant pour lait, sélectionné dans le groupe constitué de lactose et d'oligosaccharides, présent dans la composition de fortifiant pour lait en une quantité allant de 25 % p/p à 75 % p/p sur base de matières sèches, le procédé comprenant les étapes suivantes :
a. regrouper le lait de donneuses humaines;
b. séparer la matière grasse pour produire un lait écrémé;
c. microfiltrer éventuellement le lait écrémé
d. pasteuriser le lait écrémé ;
e. ultrafiltrer le lait écrémé, produisant un rétentat constitué de protéines concentrées et un perméat ; diafiltrer le lait pour concentrer davantage les proteins ;
f. concentrer le perméat par évaporation sous vide suivie du refroidissement du perméat pour cristalliser le lactose ;
g. lavage des cristaux de lactose du perméat, entraînant la récupération des nutriments essentiels à faible poids moléculaire;
h. suivre les étapes f et g ci-dessus de façon répétée sur le filtrat ainsi récupéré du perméat pour éliminer le lactose;
i. mélanger de nouveau le filtrat avec le rétentat, récupérant les nutriments essentiels dans le rétentat et créant un mélange ; et
j. ajouter éventuellement de la crème, du lactose et d'autres minéraux et nutriments au mélange pour obtenir une composition finale spécifique souhaitée.

2. Le procédé selon la revendication 1, comprenant la concentration du mélange à 40 à 75 % de matières solides et le séchage du mélange concentré par lyophilisation pour produire un fortifiant pour lait.

3. Le procédé selon l'une des revendications précédentes, dans lequel le mélange est concentré à des températures comprises entre 45 °C et 85 °C jusqu'à 40 %-75 % de matières solides totales p/p.

4. Le procédé selon la revendication 3, dans lequel les étapes de concentration et de séchage du mélange sont omises pour produire une forme liquide de fortifiant pour lait humain avec une concentration de 10 % à 60 % de matières solides totales p/v.
